# EUROPEAN PATENT APPLICATION

(11) **EP 4 814 316 A1**
(43) Date of publication of application: **30.09.2026**
(21) Application number: 26161624.7
(22) Date of filing: 02.03.2026
(51) Int. Cl.: F15B 13/04, F15B 13/043, F15B 19/00, F16K 11/07, F16K 31/06

(54) **NULL AND MAXIMUM FLOW ADJUSTABLE ELECTROHYDRAULIC SERVO VALVE (EHSV)**

(30) Priority: 25.03.2025 US 202519089692
(71) Applicant: Honeywell International Inc., Charlotte, NC 28202 (US)
(72) Inventor: TILLICH, Sammuel, Charlotte, 28202 (US); RULLI, Anthony, Charlotte, 28202 (US); MEEK, Jonathan, Charlotte, 28202 (US)
(74) Representative: Ingrassia, Fisher & Lorenz UK Ltd.

(57) **Abstract**

An electrohydraulic servo valve (EHSV) includes a spool valve body, a spool sleeve, a spool valve, a first null adjustment structure, a second null adjustment structure, a first maximum flow adjustment structure, and a second maximum flow adjustment structure. The spool sleeve is disposed within the valve body cavity and is movable relative to the spool valve body and along the axial axis. The spool valve is disposed within the spool sleeve and is moveable to a plurality of valve positions between a null position, a first maximum flow position, and a second maximum flow position. The first and second null adjustment structures are used to adjust a position of the spool sleeve, and the first and second maximum flow adjustment structures are used to adjust the first and second maximum flow positions, respectively.

## Description

### TECHNICAL FIELD

The present disclosure generally relates to electrohydraulic servo valves (EHSVs), and more particularly relates to an EHSV with null and maximum flow adjustment structures.

### BACKGROUND

Electrohydraulic servo valves (EHSVs) are used in numerous and varied systems. As is generally known, an EHSV is an electrically operated hydraulic servo valve that controls how hydraulic fluid is ported to a hydraulic load, such as an actuator. A typical EHSV includes torque motor, a control mechanism, and a spool valve. The torque motor is responsive to an applied current to rotate to a position. The control mechanism, which is most commonly either a flapper or jet tube, is coupled to, and thus rotates with the torque motor. The position of the control mechanism impacts the differential pressure across the spool valve, causing it to move, which may in turn impact hydraulic fluid pressure across another device, such as, for example, a hydraulic actuator.

Many EHSVs, upon initial assembly and/or re-assembly following maintenance, are calibrated to set both the null (i.e., zero-flow) position and the maximum flow positions of the spool valve. Currently, this is a relatively time-consuming process, involving numerous, and sometimes custom-fit, components. This can lead to increased costs due to both the time associated with the calibration process and the storage requirements associated with the numerous components.

Hence, there is a need for an EHSV that is configured to simplify the null and maximum flow adjustments by not relying on numerous components and time-consuming processes. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an electrohydraulic servo valve (EHSV) includes a spool valve body, a spool sleeve, a spool valve, a first null adjustment structure, a second null adjustment structure, a first maximum flow adjustment structure, and a second maximum flow adjustment structure. The spool valve body includes at least a valve body first end, a valve body second end, and valve body inner surface that defines a valve body cavity that is symmetric about an axial axis. The spool sleeve includes at least a sleeve first end and a sleeve second end. The spool sleeve is disposed within the valve body cavity and is movable relative to the spool valve body and along the axial axis. The spool valve is disposed within the spool sleeve and is moveable within the spool sleeve and along the axial axis. The spool valve is moveable, in response to input stimuli, to a plurality of valve positions between a null position, a first maximum flow position, and a second maximum flow position. The first null adjustment structure is disposed within the valve body cavity and engages the spool sleeve first end. The first null adjustment structure is adjustably moveable relative to the spool valve body. The second null adjustment structure is disposed within the valve body cavity and engages the spool sleeve second end. The second null adjustment structure is adjustably moveable relative to the spool valve body. The first maximum flow adjustment structure is disposed within the valve body cavity and is adjustably moveable relative to the spool valve body. The first maximum flow structure is engaged by the spool valve when the spool valve is in the first maximum flow position. The second maximum flow adjustment structure is disposed within the valve body cavity and is adjustably moveable relative to the spool valve body. The second maximum flow structure is engaged by the spool valve when the spool valve is in the second maximum flow position. The first and second null adjustment structures are used to adjust a position of the spool sleeve, and the first and second maximum flow adjustment structures are used to adjust the first and second maximum flow positions, respectively.

In another embodiment, an electrohydraulic servo valve (EHSV) includes a spool valve body, a spool sleeve, a spool valve, a torque motor actuator, a first null adjustment structure, a second null adjustment structure, a first maximum flow adjustment structure, and a second maximum flow adjustment structure. The spool valve body includes at least a valve body first end, a valve body second end, and valve body inner surface that defines a valve body cavity that is symmetric about an axial axis. The spool sleeve includes at least a sleeve first end and a sleeve second end. The spool sleeve is disposed within the valve body cavity and is movable relative to the spool valve body and along the axial axis. The spool valve is disposed within the spool sleeve and is moveable within the spool sleeve and along the axial axis. The spool valve is moveable, in response to input stimuli, to a plurality of valve positions between a null position, a first maximum flow position, and a second maximum flow position. The torque motor actuator is coupled to the spool valve body. The torque motor actuator is adapted to receive command signals and is configured, in response to the received command signals, to supply the input stimuli to the spool valve. The first null adjustment structure is disposed within the valve body cavity and engages the spool sleeve first end. The first null adjustment structure is adjustably moveable relative to the spool valve body. The second null adjustment structure is disposed within the valve body cavity and engages the spool sleeve second end. The second null adjustment structure is adjustably moveable relative to the spool valve body. The first maximum flow adjustment structure is disposed within the valve body cavity and is adjustably moveable relative to the spool valve body. The first maximum flow structure is engaged by the spool valve when the spool valve is in the first maximum flow position. The second maximum flow adjustment structure is disposed within the valve body cavity and is adjustably moveable relative to the spool valve body. The second maximum flow structure is engaged by the spool valve when the spool valve is in the second maximum flow position. The first and second null adjustment structures are used to adjust a position of the spool sleeve, and the first and second maximum flow adjustment structures are used to adjust the first and second maximum flow positions, respectively.

In yet another embodiment, an electrohydraulic servo valve (EHSV) includes a spool valve body, a spool sleeve, a spool valve, a groove, a feedback spring, a first null adjustment structure, a second null adjustment structure, a first maximum flow adjustment structure, and a second maximum flow adjustment structure. The spool valve body includes at least a valve body first end, a valve body second end, and valve body inner surface that defines a valve body cavity that is symmetric about an axial axis. The spool sleeve includes at least a sleeve first end and a sleeve second end. The spool sleeve is disposed within the valve body cavity and is movable relative to the spool valve body and along the axial axis. The spool valve is disposed within the spool sleeve and is moveable within the spool sleeve and along the axial axis. The spool valve is moveable, in response to input stimuli, to a plurality of valve positions between a null position, a first maximum flow position, and a second maximum flow position. The groove is formed within the spool valve. The feedback spring has a first end and a second end. The first end is adapted to be coupled to an actuator, and the second end is at least partially disposed within the groove. The first null adjustment structure is disposed within the valve body cavity and engages the spool sleeve first end. The first null adjustment structure is adjustably moveable relative to the spool valve body. The second null adjustment structure is disposed within the valve body cavity and engages the spool sleeve second end. The second null adjustment structure is adjustably moveable relative to the spool valve body. The first maximum flow adjustment structure is disposed within the valve body cavity and is adjustably moveable relative to the spool valve body. The first maximum flow structure is engaged by the spool valve when the spool valve is in the first maximum flow position. The second maximum flow adjustment structure is disposed within the valve body cavity and is adjustably moveable relative to the spool valve body. The second maximum flow structure is engaged by the spool valve when the spool valve is in the second maximum flow position. The first and second null adjustment structures are used to adjust a position of the spool sleeve, and the first and second maximum flow adjustment structures are used to adjust the first and second maximum flow positions, respectively.

Furthermore, other desirable features and characteristics of the electrohydraulic servo valve will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a simplified schematic representation of one embodiment of an electrohydraulic servo valve in a null position;
FIG. 2 depicts the electrohydraulic servo valve of FIG. 1 in a first maximum flow position; and
FIG. 3 depicts the electrohydraulic servo valve of FIG. 1 in a second maximum flow position.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

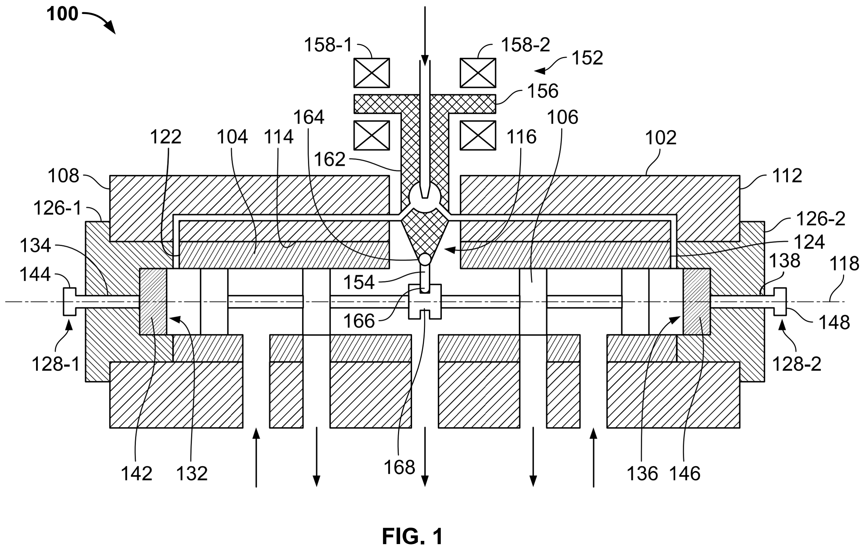

Referring to FIG. 1, a simplified schematic representation of one embodiment of an electrohydraulic servo valve (EHSV) 100 is depicted, and includes at least a spool valve body 102, a spool sleeve 104, and a spool valve 106. The spool valve body 102 includes at least a valve body first end 108, a valve body second end 112, and valve body inner surface 114. The valve body inner surface 114 defines a valve body cavity 116 that is symmetric about an axial axis 118.

The spool sleeve 104 is disposed within the valve body cavity 116 and is movable relative to the spool valve body 102 and along the axial axis 118. The spool sleeve 104 additionally includes at least a sleeve first end 122 and a sleeve second end 124, and has the spool valve 106 disposed therein.

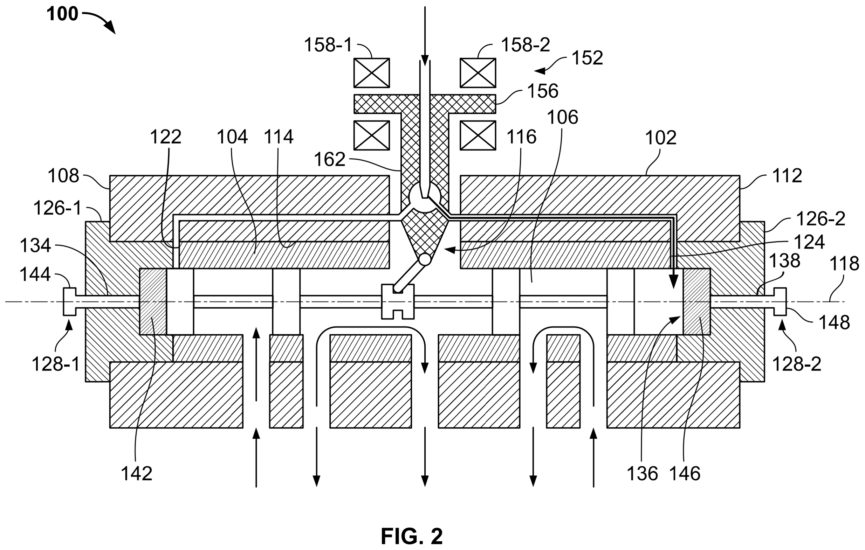

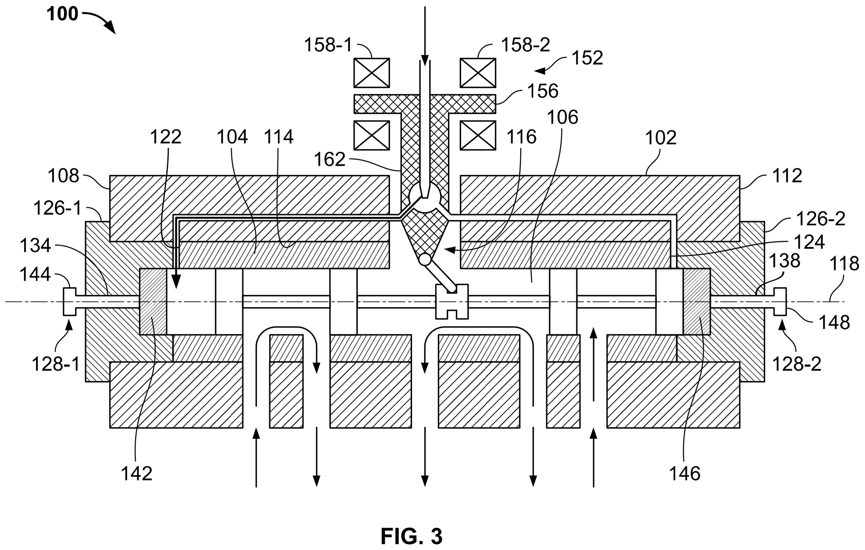

The spool valve 106 is moveable within the spool sleeve 104 and along the axial axis 118. More specifically, and as will be discussed further below, the spool valve 106 moveable, in response to input stimuli, to a plurality of valve positions between a null position (see FIG. 1), a first maximum flow position (see FIG. 2), and a second maximum flow position (see FIG. 3).

As FIGS. 1 further depicts, the EHSV 100 additionally includes a plurality of null adjustment structures 126 and a plurality of maximum flow adjustment structures 128. More specifically, the EHSV includes a first null adjustment 126-1, a second null adjustment structure 126-2, a first maximum flow adjustment structure 128-1, and a second maximum flow adjustment structure 128-2. The first null adjustment structure 126-1 is disposed within the valve body cavity 114 and engages the spool sleeve first end 122. The second null adjustment structure 126-2 is also disposed within the valve body cavity 114 but engages the spool sleeve second end 124. Both the first null adjustment structure 126-1 and the second null adjustment structure 126-2 are adjustably moveable relative to the spool valve body 102. In particular, at least in the depicted embodiment, the first and second null adjustment structures 126-1, 126-2 are adjustable via mating threads formed on portions of the valve body inner surface 114 and on portions of the first and second null adjustment structures 126-1, 126-2. As may thus be appreciated, the first and second null adjustment structures 126-1, 126-2 are used to adjust the position of the spool sleeve 104, and more specifically to adjust the position of the spool sleeve 104 to the null position of the EHSV 100.

The first maximum flow adjustment structure 128-1 is disposed within the valve body cavity 116 and is adjustably moveable relative to the spool valve body 102. The second maximum flow adjustment structure 128-2 is also disposed within the valve body cavity 116 and is adjustably moveable relative to the spool valve body 102. As depicted in FIG. 2, the first maximum flow structure 128-2 is engaged by the spool valve 106 when the spool valve 106 is in the first maximum flow position. As FIG. 3 depicts, the second maximum flow structure 128-2 is engaged by the spool valve 106 when the spool valve 106 is in the second maximum flow position. Because the first and second maximum flow adjustment structures 128-1, 128-2 are adjustable, these structures are used to adjust the first and second maximum flow positions of the spool valve 106.

Although the configuration of the null adjustment structures 126 may vary, it is seen that in the depicted embodiment, the first null adjustment structure 126-1 includes a first null adjustment cavity 132, within which the first maximum flow adjustment structure 128-1 is at least partially disposed. The first null adjustment structure 126-1 additionally includes a first threaded opening 134 that extends at least partially therethrough along the axial axis 118. Similarly, the second null adjustment structure 126-2 includes a second null adjustment cavity 136, within which the second maximum flow adjustment structure 128-2 is at least partially disposed. The second null adjustment structure 126-2 also includes a second threaded opening 138 extending at least partially therethrough along the axial axis 118.

It will additionally be appreciated that the configuration of the maximum flow adjustment structures 128 may vary. However, in the depicted embodiment, the first maximum flow adjustment structure 128-1 includes a first maximum flow plate 142 and a first threaded screw 144, and the second maximum flow adjustment structure 128-2 includes a second maximum flow plate 146 and a first threaded screw 148. The first maximum flow plate 142 is movably disposed within the first null adjustment cavity 132, and the first threaded screw 144 extends through the first threaded opening 134 and engages the first maximum flow plate 142. The second maximum flow plate 146 is movably disposed within the second null adjustment cavity 136, and the first threaded screw 148 extends through the second threaded opening 138 and engages the second maximum flow plate 146.

As FIGS. 1-3 additionally depict, the EHSV 100 also includes an actuator 152 and a feedback spring 154. The actuator 152, which is coupled to the spool valve body 102, is adapted to receive command signals and is configured, in response to the received command signals, to supply the input stimuli to the spool valve 106. Although the actuator 152 may be variously configured, in the depicted embodiment, the actuator 152 is configured as a torque motor actuator that includes at least an armature an armature 156, a pair of coils 158 (158-1, 158-2), and a control mechanism 162. The armature 156 is rotationally mounted, and the coils 158 are wrapped around opposing portions of the armature 156. The control mechanism 162 is coupled to, and is rotatable with, the armature 156. When current is supplied to the coils 158, a torque is generated that causes the armature 156, and thus the control mechanism 162, to rotate.

The feedback spring 154 has a first end 164 and a second end 166. The first end 164 is coupled to the actuator 152, and more specifically to the control mechanism 162. The second end 166 is at least partially disposed within a groove 168 that is formed within the spool valve 106. The feedback spring 154, as is generally known, functions, at least in part, to bias the spool valve 106 toward the null position. Although feedback springs 154 are not new, the groove 168 is a precision groove and because the second end 166 of the feedback spring 154 is disposed within the precision groove, rotation of the spool valve 106 is not an issue. Thus, additional anti-rotation hardware, which is typically included in many EHSVs, is not needed.

The EHSV 100 described herein provides numerous advantages over presently known EHSVs. For example, no portions of the EHSV 100 need to be removed to adjust the null position; because the spool sleeve 104 is clamped via the null adjustment structures 126, the EHSV 100 will not experience null shift; multiple maximum flow stops are not required; and various internal hardware used to prevent rotation of the spool valve 106 is not needed, which means a smaller spool valve 106 can be used. A smaller spool valve 106 provides better performance and higher frequency response.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An electrohydraulic servo valve (EHSV), comprising:
a spool valve body including at least a valve body first end, a valve body second end, and valve body inner surface, the valve body inner surface defining a valve body cavity that is symmetric about an axial axis;
a spool sleeve including at least a sleeve first end and a sleeve second end, the spool sleeve disposed within the valve body cavity and movable relative to the spool valve body and along the axial axis;
a spool valve disposed within the spool sleeve and moveable within the spool sleeve and along the axial axis, the spool valve moveable, in response to input stimuli, to a plurality of valve positions between a null position, a first maximum flow position, and a second maximum flow position;
a first null adjustment structure disposed within the valve body cavity and engaging the spool sleeve first end, the first null adjustment structure adjustably moveable relative to the spool valve body;
a second null adjustment structure disposed within the valve body cavity and engaging the spool sleeve second end, the second null adjustment structure adjustably moveable relative to the spool valve body;
a first maximum flow adjustment structure disposed within the valve body cavity and adjustably moveable relative to the spool valve body, the first maximum flow structure engaged by the spool valve when the spool valve is in the first maximum flow position; and
a second maximum flow adjustment structure disposed within the valve body cavity and adjustably moveable relative to the spool valve body, the second maximum flow structure engaged by the spool valve when the spool valve is in the second maximum flow position,
wherein:
the first and second null adjustment structures are used to adjust a position of the spool sleeve, and
the first and second maximum flow adjustment structures are used to adjust the first and second maximum flow positions, respectively.

2. The EHSV of claim 1, wherein the first and second null adjustment structures are adjustable via mating threads formed on portions of the valve body inner surface and on portions of the first and second null adjustment structures.

3. The EHSV of claim 1, wherein:
the first null adjustment structure includes a first null adjustment cavity;
the second null adjustment structure includes a second null adjustment cavity;
the first maximum flow adjustment structure is at least partially disposed within the first null adjustment cavity; and
the second maximum flow adjustment structure is at least partially disposed within the second null adjustment cavity.

4. The EHSV of claim 3, wherein:
the first null adjustment structure includes a first threaded opening extending at least partially therethrough along the axial axis;
the second null adjustment structure includes a second threaded opening extending at least partially therethrough along the axial axis.

5. The EHSV of claim 4, wherein:
the first maximum flow adjustment structure comprises:
a first maximum flow plate movably disposed within the first null adjustment cavity; and
a first threaded screw that extends through the first threaded opening and engages the first maximum flow plate; and
the second maximum flow adjustment structure comprises:
a second maximum flow plate movably disposed within the second null adjustment cavity; and
a second threaded screw that extends through the second threaded opening and engages the second maximum flow plate.

6. The EHSV of claim 1, further comprising:
an actuator coupled to the spool valve body, the actuator adapted to receive command signals and configured, in response to the received command signals, to supply the input stimuli to the spool valve.

7. The EHSV of claim 5, further comprising:
a groove formed within the spool valve; and
a feedback spring having a first end and a second end, the first end coupled to the actuator, the second end at least partially disposed within the groove.
